# EUROPEAN PATENT APPLICATION

(11) **EP 4 495 468 A1**
(43) Date of publication of application: **22.01.2025**
(21) Application number: 24188802.3
(22) Date of filing: 16.07.2024
(51) Int. Cl.: F16K 31/40, F16K 31/08, F16K 31/06, F16K 27/02

(54) **INDIRECT ACTION SOLENOID VALVE**

(30) Priority: 18.07.2023 IT 202300014997
(71) Applicant: ELBI International S.p.A., 10129 Torino (IT)
(72) Inventor: VERDIRAME, Stefano, 17012 Albissola Marina (Savona) (IT); BARALE, Emanuele, 12100 Cuneo (IT); MARONE, Giuseppe, 10042 Nichelino (Torino) (IT)
(74) Representative: Vanzini, Christian

(57) **Abstract**

An indirect action solenoid valve comprising a hollow valve body (2), a main obstructing member (28, 29), a pilot obstructing member (13), a movable core (12) coupled in a fixed manner to the pilot obstructing member (13), a solenoid (10) energizable such as to control the movable core (12) and a spring (19) configured to push the pilot obstructing member (13) towards a pilot valve seat (33), and a permanent magnet (21) configured to attract the movable core (12) away from the pilot valve seat (33).

The pilot obstructing member (13) may be held in an open position by the combined application of magnetic forces from the permanent magnet (21) and from the solenoid (10) on the movable core (12). The de-energizing of the solenoid (10) causes the pilot obstructing member (13) to move from the open position to a closed position. The electrical power required by the solenoid (10) to hold the pilot obstructing member (13) in the open position is less than the electrical power required by the solenoid (10) to withdraw the pilot obstructing member (13) from the closed position.

## Description

The present invention relates to an indirect action solenoid valve used in particular, but not only, in domestic appliances.

More specifically, the invention relates to an indirect action solenoid valve of the type comprising
a hollow valve body with an inlet and an outlet for a fluid to flow, wherebetween a chamber is formed in the valve body, wherein a main valve seat is provided in the chamber, and wherein the valve body comprises a tubular portion connected with to chamber,
a main obstructing member mounted in a movable manner within the chamber and cooperating with the main valve seat to control fluid communication between the inlet and the outlet, wherein a narrow passage is formed through the main obstructing member, at which a pilot valve seat is provided,
a pilot obstructing member cooperating with the pilot valve seat such as to control the fluid communication through the narrow passage, said pilot obstructing member being movable between a closed position wherein the pilot obstructing member is engaged with the pilot valve seat, and an open position wherein the pilot obstructing member is removed from the pilot valve seat,
a movable core coupled in a fixed manner with the pilot obstructing member and displaceable towards and away from the pilot valve seat, said movable core being arranged in the tubular portion,
a solenoid mounted in a fixed manner and surrounding the tubular portion, said solenoid being energizable such as to control the movable core, and
elastic means configured to push the pilot obstructing member towards the pilot valve seat.

In household appliances powered by a low-power, low-voltage (LPLV) system, the electrical power to the solenoid valves is fed to, and regulated by, a control unit of the household appliance. Such electrical power is not passively controlled by the resistance of the solenoid valve coil as in other conventional power supply systems.

The LPLV system allows hydraulic valves to be powered in two steps:
- a first step called a cue, wherein the movable core of the valve begins to move by the action of the magnetic force generated by the coil, towards a position that hydraulically opens the valve;
- a second step called hold, wherein the movable core is held in the position wherein the valve is hydraulically open.

One object of the present invention is to provide an indirect action solenoid valve that is suitable for use in LPLV power supply systems.

According to the invention, this and other objects are achieved with an indirect action solenoid valve of the type defined above, further comprising a permanent magnet mounted in a fixed position and configured to attract the movable core away from the pilot valve seat,
wherein the pilot obstructing member may be held in the open position by the combined application of magnetic forces from the permanent magnet and from the solenoid on the movable core,
wherein de-energizing the solenoid causes the pilot obstructing member to move from the open position to the closed position, and
wherein the electrical power needed by the solenoid to hold the pilot obstructing member in the open position is less than the electrical power needed by the solenoid in order to withdraw the pilot obstructing member from the closed position.

In light of the low power required during the maintenance phase wherein the movable core/pilot obstructing member is held in the open position, the amount of coil winding copper wire may be reduced and compensated for by the permanent magnet which is economically more advantageous than the amount of copper wire replaced by the permanent magnet.

Further features and advantages of the invention will become clear from the detailed description that follows, given purely by way of non-limiting example and with reference to the accompanying drawings, wherein:
- Figure 1 shows a sectional longitudinal view of an indirect action solenoid valve according to the present invention;
- Figure 2 shows a sectional perspective view of the solenoid valve in Figure 1;
- Figure 3 shows an axial sectional view of the solenoid valve of Figure 1; and
- Figure 4 shows a perspective view of the solenoid valve wherein a casing part has been omitted.

The indirectly action solenoid valve comprises a hollow valve body, indicated as a whole with the numeral 2, wherein the exemplary embodiment shown comprises a first body portion 2a and a second body portion 2b, coupled together in a liquid-tight manner.

The first body portion 2a and the second body portion 2b may be made, for example, of a molded plastic material.

The valve body 2 has two ducts 4 and 5, which may serve as an inlet or outlet for a fluid to flow, in particular a liquid.

Between such ducts 4, 5, a chamber 6 is formed in the valve body 2. A main valve seat 7 is obtained from the valve body 2, in the chamber 6.

In the second body portion 2b of the valve body 2, a control coil or solenoid coil 10 is mounted in a fixed position, made in a manner known per sé using insulated electrical wire. The conductors of such coil or solenoid are connected to respective terminals 10' for connection to a control circuit (not shown), through a connector 2f integrated into the valve body 2. In the example shown, the connector 2f is formed in the first body portion 2a. In the embodiment shown in the figures, the coil 10 is wound about a tubular portion 2c of the second body portion 2b of the valve body 2.

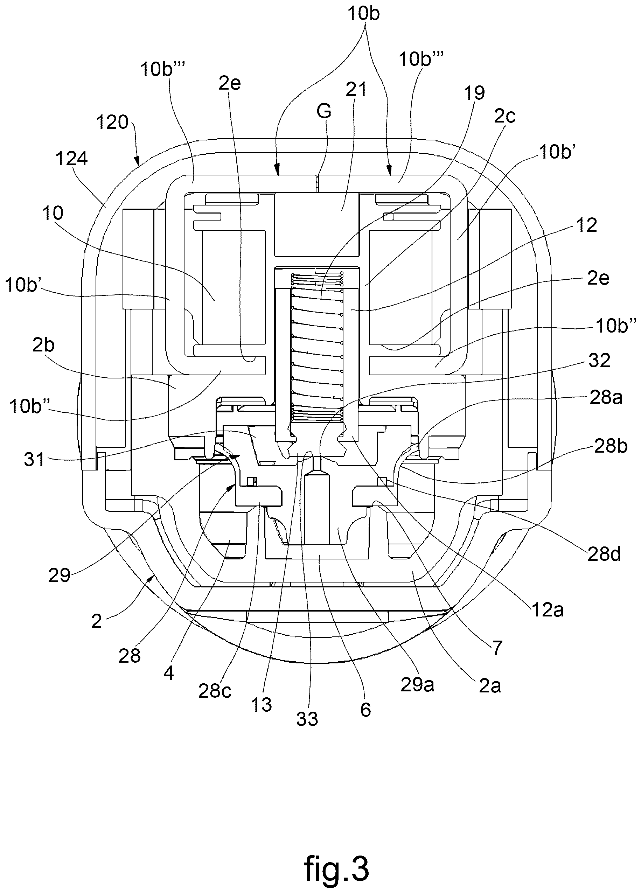

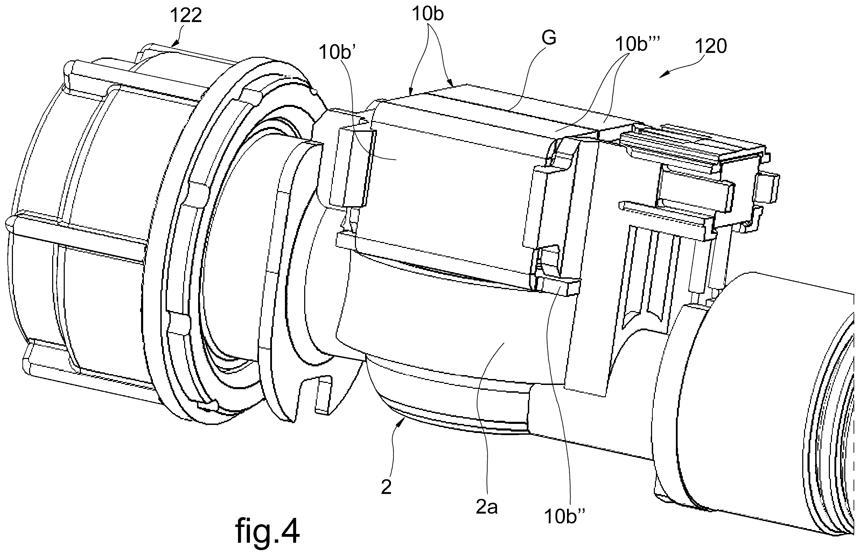

The tubular portion 2c is connected to the chamber 6 and extends from the second body portion 2b of the valve body 2 such as to form a spool for winding the coil 10. A shell structure 10b of ferromagnetic material is assembled to such spool, which in the example shown is formed by two elements that are not mechanically connected therebetween but that are coupled to the valve body 2. In particular, such elements are two U-shaped elements snap-coupled to the valve body 2, as may be seen in Figures 3 and 4. Each C-shaped element comprises an intermediate portion 10b' and opposite side flanges 10b" and 10 b‴ extending from the intermediate portion 10b' at respective ends thereof. The side flanges indicated with 10b", which in the following will be called proximal side flanges, abut centrally against the tubular portion 2c, and laterally extend such as to surround the tubular portion 2c. The proximal lateral flanges 10b", at such lateral extensions, are positioned in front of each other but separated by a gap. The side flanges denoted by 10b‴, which will be referred to as distal lateral flanges hereinafter, are arranged at a height beyond the distal end of the tubular portion 2c. The distal lateral flanges 10b‴ are positioned opposite therebetween but separated by a gap G that is visible in Figures 3 and 4. The two elements of the shell structure 10b, do not therefore achieve magnetic continuity therebetween. As may be seen from Figure 4, the two U-shaped elements are mounted on the valve body 2 by sliding them according to a transverse assembly direction directed towards the central axis of the solenoid valve, on opposite sides of the valve body 2. The two peripheral edges of each of the proximal lateral flanges 10b" of the U-shaped elements are inserted into respective grooves 2d obtained in the first body portion 2a. The central part of each of the proximal lateral flanges 10b" of the U-shaped elements is inserted into a respective slit 2e obtained in the second body portion 2b, about the tubular portion 2c. In this way, the insertion of the two U-shaped elements anchors the second body portion 2b to the first body portion 2a.

Inside the tubular portion 2c of the second body portion 2b, a movable core 12 of ferromagnetic material is mounted in a sliding manner, guided by the tubular portion 2c. The movable core 12 is a hollow cylindrical piece.

One end of the movable core 12 protruding from the tubular portion 2c forms an end head 12a, whereto a pilot obstructing member 13 is fixed. A head portion of the pilot obstructing member 13 is intended to engage with a pilot valve seat (described below) when the pilot obstructing member 13 is in the closed position shown in the figures. In the open position (not shown), the pilot obstructing member 13 is removed from the pilot valve seat.

A helical spring 19 is arranged coaxially inside the movable core 12, and is interposed between a bottom of the tubular portion 2c and the end head 12a of the movable core 12 bearing the pilot obstructing member 13. The helical spring 19 tends to push the assembly formed by the movable core 12 and the obstruction member 13 toward the pilot valve seat.

A permanent magnet 21 is mounted in a fixed position on the valve body 2. The permanent magnet 21 is configured to attract the movable core 12 away from the pilot valve seat. In the embodiment shown in the figures, the permanent magnet 21 is arranged at one end of the tubular portion 2c opposite the movable core 12, in particular outside the tubular portion 2c. According to alternative embodiments (not shown), the permanent magnet 21 may be arranged inside the tubular portion 2c or in other positions of the valve body 2. The position wherein the permanent magnet 21 is arranged is such that the magnetic force applied to the movable core 12 by the permanent magnet 21 is less than the elastic force applied to the movable core/obstruction member assembly by the spring 19 in each position of the movable core 12 and pilot obstructing member 13 between the closed position and the open position.

The permanent magnet 21 defines a magnetic circuit together with the shell structure 10b; this confers to the movable core a force characteristic with only one increasing phase.

The permanent magnet 21 may be made of ferromagnetic metal or plastic material mixed with magnetic powder, such as plastoferrite. In one embodiment, wherein the permanent magnet is made of plastic material mixed with plastoferrite, the permanent magnet 21 may be obtained as an integral part of the valve body.

A peripheral portion 28a of an annular membrane, indicated as a whole with the numeral 28, is fixed to the second valve body 2b.

The annular membrane 28 comprises a flexible intermediate portion 28b connecting the peripheral portion 28a to a thicker annular central portion 28c and that is intended to act as a main obstruction member cooperating with the main valve seat 7. In the closed position shown in the figures, a certain amount of compression of the annular central portion 28c against the main valve seat 7 is ensured by the insertion of the proximal lateral flanges 10b" of the U-shaped elements into the grooves 2d and into the slots 2e obtained in the first body portion 2a and in the second body portion 2b, respectively.

The portion 28c of the membrane 28 is mounted about a stem 29a of an essentially cup-shaped guide element 29.

A control chamber 31 is defined between the second body portion 2b and the assembly formed by the membrane 28 and the associated guide element 29.

The control chamber 31 is in permanent fluid communication with the inlet 4, through at least one passage 28d which in the example shown is formed within the obstruction assembly comprising the membrane 28 and the associated guide element 29. Permanent communication between the inlet 4 and the control chamber 11 may be obtained differently from that described above, for example by means of passages formed in the body portions 2a and 2b.

A passage 32 formed in the guide element 29 is capable of placing the control chamber 11 in communication with the outlet 5. In the embodiment shown, the end of the passage 32 facing the pilot obstructing member 13 has a protruding edge acting as a pilot valve seat 33 for the pilot obstructing member 13.

During operation, when the solenoid 10 is inactive (de-energized), the hydraulic fluid supplied at the inlet 4 of the valve reaches the control chamber 11 through the passages 28d. the pilot obstructing member 13 holds the valve seat 33 closed and therefore the control chamber 11 separated from the outlet duct 5.

Under these conditions, the control chamber 11 initially assumes, and therefore maintains, the same pressure as the hydraulic fluid in the inlet conduit 4.

The portion 28c of the membrane 28, which acts as a main obstruction member, presses against the main valve seat 7, as a result of the greater surface area of such membrane 28 and of the associated guide element 29 exposed to pressure inside the control chamber 11 with respect to the surface area that is exposed to the pressure in the inlet duct 4.

The main obstruction member 28c-29 is therefore in the closed position.

When the solenoid 12 is energized, a magnetic flux passes through the movable core 12. The movable core 12 is then attracted away from the pilot valve seat 33, against the action of the helical spring 19, and the pilot obstructing member 13 then releases the pilot valve seat 33.

The pressure of the hydraulic fluid in the control chamber 11 may then be released towards the outlet duct 5 through the narrow passage 32 of the guide element 29.

As the pressure inside the control chamber 11 decreases, the pressure in the inlet duct 4 acting on the membrane 28 is able to cause the assembly formed by the membrane 28 and the associated guide element 29 to rise, effectively causing the main obstruction member 28c-29 to open.

The hydraulic fluid supplied to the valve through the inlet duct 4 may then reach the outlet duct 5 through the main valve seat 7.

Advantageously, the pilot obstructing member 13 is held in the open position by the combined application of the magnetic forces of the permanent magnet 21 and the solenoid 10. The electrical power required by the solenoid 10 to hold the pilot obstruction element 13 in the open position is therefore less than the electrical power required by the solenoid 10 to withdraw the pilot obstruction element 13 from the closed position. The electrical power may therefore be reduced during the movable core/pilot obstructing member maintenance phase.

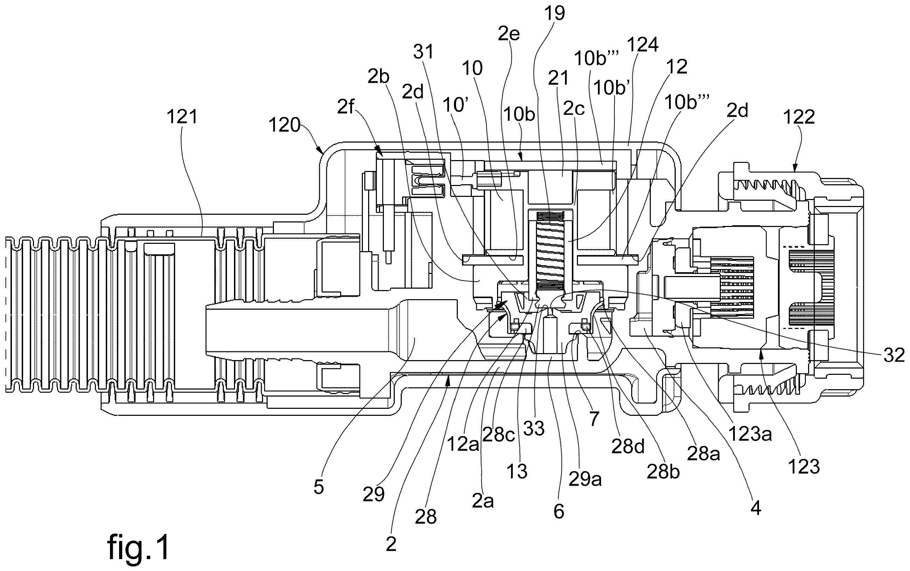

When the solenoid 10 is once again de-energized, the movable core 12 again assumes the position shown in Figure 1, due to the action of the spring 19.

The pilot obstructing member 13 then closes the pilot valve seat 33, and the control chamber 11 is again disconnected from the outlet duct 5.

The assembly formed by the membrane 8 and the associated guide element 9 then assumes the closed position shown in Figure 1.

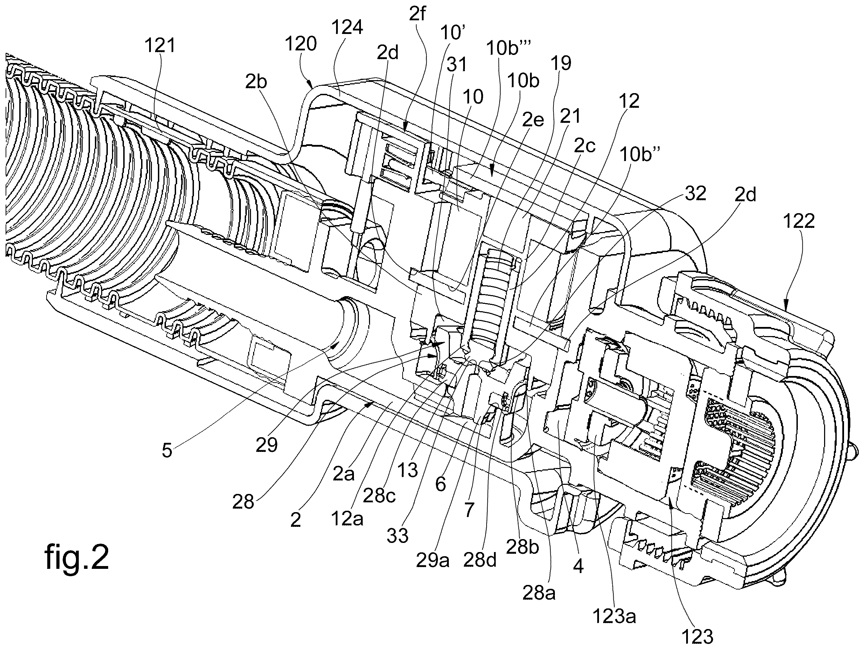

In the example shown, the indirect action solenoid valve is conventionally comprised within a safety device 120 associated with a supply tube 121 which is used to supply a hydraulic fluid to a domestic appliance (not shown). For clarity, in Figure 4 the device 120 is shown without the outer casing, which in Figure 1-3 is indicated with the numeral 124.

A connector 122 is provided upstream of the device for connecting to a water distribution network. A flowmeter 123 arranged upstream of the valve described above may also be envisaged. According to an alternative embodiment, the flowmeter 123 may be arranged downstream of the valve. Conventionally, this flowmeter comprises an impeller 123a configured to be rotated by a fluid flow passing through the flowmeter, and a sensor (not shown) configured to provide a signal that is indicative of the rotational speed of the impeller 123a. Advantageously, the aforesaid sensor may be connected, via dedicated conductors, to additional terminals provided within the integrated connector 2f.

It is however understood that the specific application described above is provided merely as a non-limiting example of the invention. The solenoid valve and the flowmeter may for example be integrated into a device that is different from that described above.

## Claims

1. Indirect action solenoid valve, comprising
a hollow valve body (2) with an inlet and an outlet (4, 5) for a fluid to flow, where between a chamber (6) is formed in the valve body (2), wherein a main valve seat (7) is provided in the chamber (6), and wherein the valve body (2) comprises a tubular portion (2c) connected with the chamber (6),
a main obstructing member (28, 29) mounted in a movable manner within the chamber (6) and cooperating with the main valve seat (7) to control fluid communication between the inlet (4) and the outlet (5), wherein a narrow passage (32) is formed through the main obstructing member (28, 29), at which a pilot valve seat (33) is provided,
a pilot obstructing member (13) cooperating with the pilot valve seat (33) such as to control the fluid communication through the narrow passage (32), said pilot obstructing member (13) being movable between a closed position wherein the pilot obstructing member (13) is engaged with the pilot valve seat (33), and an open position in which the pilot obstructing member (13) is away from the pilot valve seat (33),
a movable core (12) coupled in a fixed manner with the pilot obstructing member (13) and displaceable towards and away from the pilot valve seat (33), said movable core (12) being arranged in the tubular portion (2c),
a solenoid (10) mounted in a fixed manner and surrounding the tubular portion (2c), said solenoid (10) being energizable to control the movable core (12), and
resilient means (19) configured to push the pilot obstructing member (13) towards the pilot valve seat (33),
**characterized in that** it further comprises a permanent magnet (21) mounted in a fixed manner and configured to attract the movable core (12) away from the pilot valve seat (33),
wherein the pilot obstructing member (13) may be held in the open position by means of the combined application of magnetic forces from the permanent magnet (21) and the solenoid (10) on the movable core (12),
wherein de-energizing of the solenoid (10) causes the pilot obstructing member (13) to move from the open position to the closed position, and
wherein the electrical power needed by the solenoid (10) to hold the pilot obstructing member (13) in the open position is less than the electrical power needed by the solenoid (10) to remove the pilot obstructing member (13) from the closed position.

2. Indirect action solenoid valve according to claim 1, wherein the movable core (12) is a piece of ferromagnetic material.

3. Indirect action solenoid valve according to claim 1 or 2, wherein the permanent magnet (21) defined a magnetic circuit together with a shell structure (10b) of the solenoid (10).

4. Indirect action solenoid valve according to claim 3, wherein the shell structure (10b) comprises a pair of U-shaped elements of ferromagnetic material coupled to the valve body (2) separately from each other to form a magnetic discontinuity therebetween.

5. Indirect action solenoid valve according to claim 4, wherein each of the U-shaped elements comprises a proximal lateral flange (10b") having two peripheral edges fitted into respective grooves (2d) formed in a first body portion (2a) of the valve body (2), and a central part fitted into a respective slot (2e) formed in a second body portion (2b) of the valve body (2), around the tubular portion (2c), in order to ensure a compression of the main obstructing member (28, 29) against the main valve seat (7) when the main obstructing member (28, 29) is engaged con la main valve seat (7).

6. Indirect action solenoid valve according to any of the preceding claims, wherein the main obstructing member comprises an annular membrane (28) comprising a peripheral portion (28a) fixed to the valve body (2), an annular central portion (28c) intended to engage the main valve seat (7), and a flexible intermediate portion (28b) connecting the peripheral portion (28a) to the annular central portion (28c), wherein the main obstructing member further comprises a guide element (29) around which the annular central portion (28c) of the membrane (28) is mounted, wherein the narrow passage (32) is formed through the guide element (29), and wherein the pilot valve seat (33) is formed around the narrow passage (32).

7. Indirect action solenoid valve according to claim 6, wherein a control chamber (31) in permanent fluid communication with the inlet (4) is defined between a body portion (2b) of the valve body (2) carrying the tubular portion (2c) and the main obstructing member formed by the membrane (28) and the guide element (29).

8. Indirect action solenoid valve according to any of the preceding claims, wherein the resilient means comprise a helical spring (19) interposed between the valve body (2) and the movable core (12).

9. Indirect action solenoid valve according to claim 8, wherein the movable core (12) is hollow and the helical spring (19) is coaxially arranged within the movable core (12).

10. Indirect action solenoid valve according to any of the preceding claims, wherein the solenoid (10) is electrically connected to terminals (10') for connection to an external control circuit, said terminals being arranged within a connector (2f) integrated in the valve body (2).

11. Device comprising an indirect action solenoid valve according to any of the preceding claims and a flowmeter (123) arranged upstream or downstream of the indirect action solenoid valve.

12. Device according to claim 11 and comprising and indirect action solenoid valve according to claim 10, wherein the flowmeter (123) is electrically connected to additional terminals for connection to the external control circuit, said additional terminals being arranged within the connector (2f) integrated into the valve body (2).
